# EUROPEAN PATENT APPLICATION

(11) **EP 1 928 129 A2**
(43) Date of publication of application: **04.06.2008**
(21) Application number: 07016271.4
(22) Date of filing: 20.08.2007
(51) Int. Cl.: H04L 12/56, H04L 12/28

(54) **Service coverage searching apparatus and method in portable terminal**

(30) Priority: 01.12.2006 KR 20060120400
(71) Applicant: Samsung Electronics Co., Ltd., Suwon-si, Gyeonggi-Do (KR)
(72) Inventor: Park, Young-Cheol, Gangnam-gu Seoul (KR)
(74) Representative: Boakes, Jason Carrington

(57) **Abstract**

Provided is an apparatus and method for searching for an accessible network in a multi-mode portable terminal in support of access to at least two different networks. The portable terminal includes a first communication module configured to communicate with a heterogeneous network, a second communication module configured to communicate with a mobile communication network, a Received Signal Strength Indicator (RSSI), and a controller. The RSSI determines if the portable terminal is in a service coverage area of the heterogeneous network. The controller operates the first communication module to demodulate received signals and determine if the received signals are of the heterogeneous network, when the RSSI determines that the portable terminal is in the service coverage area of the heterogeneous network.

## Description

### PRIORITY

This application claims priority under 35 U.S.C. § 119 to an application filed in the Korean Intellectual Property Office on December 1, 2006 and assigned Serial No. 2006-120400, the contents of which are incorporated herein by reference.

### BACKGROUND OF THE INVENTION

### 1. Field of the Invention

The present invention generally relates to a multi-mode portable terminal which supports access to at least two different networks, and in particular, to an apparatus and method for searching for an accessible network in a multi-mode portable terminal.

### 2, Description of the Related Art

As mobile communication technology advances, a mobile communication system evolves from the second-generation (2G) system, which is focused on a wireless service, into the current third-generation (3G) system that can provide a high-speed Internet service and a multimedia service based on the integration of wired and wireless environments. The mobile communication system is further evolving into the fourth-generation (4G) system featuring ultra high speed, large volume, and mobility.

Diverse communication services are popularized and people can use the communication services anytime and anywhere. Along with the progress of the mobile communication services, a portable terminal manufacturing technology is developing steadily.

Recently, multi-mode portable terminals that can be used for both mobile communication services and portable Internet services have been brought into the market. With the multi-mode portable terminal, people can access the Internet and acquire diverse and vast amounts of information and content at a high data transmission rate at any time, regardless of whether they stand still or they are in motion.

The multi-mode portable terminal provides a mobile communication service when the terminal is in a mobile communication coverage area, and it provides an Internet service when it is in a wireless Internet service coverage area.

The wireless Internet service is less expensive than the Internet service that is provided in the portable terminal through a mobile communication network.

However, since the multi-mode portable terminals decide whether they are in a wireless Internet service coverage by searching for a wireless Internet service network at intervals of a predetermined time, while searching for the mobile communication network, they consume large amounts of power searching for the service network, which may limit the use of the portable terminals.

Therefore, there is a need to develop an apparatus and method for increasing the battery retention time of the multi-mode portable terminal by reducing the power consumption for checking whether the multi-mode portable terminal is in a wireless Internet service coverage.

### SUMMARY OF THE INVENTION

An aspect of the present invention is to substantially solve at least the above problems and/or disadvantages and to provide at least the advantages set forth below. Accordingly, an aspect of the present invention is to provide an apparatus and method for reducing power consumption of a multi-mode portable terminal to support of access at least two different networks.

Another aspect of the present invention is to provide an apparatus and method for determining the presence of a heterogeneous network in a multi-mode portable terminal to support access to at least two different networks by receiving Received Signal Strength.

Yet another aspect of the present invention is to provide an apparatus and method for decoding received signals only when the presence of a heterogeneous network is confirmed in a multi-mode portable terminal to support access to at least two different networks.

According to one aspect of the present invention, a portable terminal includes a first communication module configured to communicate with a heterogeneous network, a second communication module configured to communicate with a mobile communication network, a Received Signal Strength Indicator (RSSI), and a controller. The RSSI decides whether the portable terminal is in a service coverage area of the heterogeneous network. The controller operates the first communication module to demodulate received signals and determine if the received signals are of the heterogeneous network, when the RSSI determines that the portable terminal is in the service coverage of the heterogeneous network.

According to another aspect of the present invention, in a method for reducing power consumption for searching for an accessible service network in a portable terminal, determining if the portable terminal is in a service coverage area of a heterogeneous network based on a strength of received signals. When the portable terminal is in the service coverage of the heterogeneous network, the received signals are demodulated and it is determined if the received signals are of the heterogeneous network.

According to yet another aspect of the present invention, a mobile communication system for reducing power consumption for searching for a service network in a portable terminal includes a mobile communication network for providing a mobile communication service, a heterogeneous network for providing a service except for the mobile communication service, and a portable terminal. The portable terminal supports both the mobile communication network and the heterogeneous network, and determines if signals of the heterogeneous network are received based on strength of the received signals. When the signals of the heterogeneous network are received, the portable terminal demodulates the received signals and determines if the received signals are of the heterogeneous network.

### BRIEF DESCRIPTION OF THE DRAWINGS

The above and other objects, features and advantages of the present invention will become more apparent from the following detailed description when taken in conjunction with the accompanying drawings in which:
FIG. 1 illustrates a structure of a multi-mode portable terminal according to the present invention; and
FIG 2 is a flowchart describing a process of reducing power consumption in a portable terminal searching for a broadband communication network according to the present invention.

### DETAILED DESCRIPTION OF THE PREFERRED EMBODIMENTS

Preferred embodiments of the present invention will be described herein below with reference to the accompanying drawings. In the following description, well-known functions or constructions are not described in detail since they would obscure the invention in unnecessary detail. Terms used in the present specification are defined in consideration of the corresponding functions in the present invention. Since their meaning may be different according to the intension of a user or an operator, or practice, their definition should be determined based on the overall contents of the present specification.

Described hereinafter is an apparatus and method for reducing power consumption while searching for a heterogeneous network in a multi-mode portable terminal to support access to at least two different networks, namely a mobile communication network and a heterogeneous network.

A heterogeneous network is a network, other than a mobile communication network, and is a broadband network including Wireless Broadband Internet (WiBro) and High Speed Downlink Packet Access (HSDPA). Hereafter, the present invention will be described with respect to the Wibro.

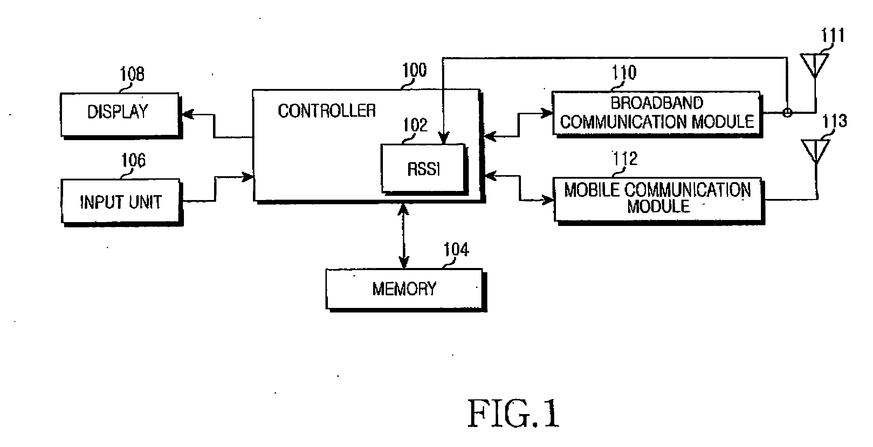

FIG. 1 illustrates a structure of a multi-mode portable terminal according to the present invention. Referring to FIG. 1, the multi-mode portable terminal includes a controller 100, a Received Signal Strength Indicator (RSSI) 102, a memory 104, an input unit 106, a display 108, a mobile communication module 112, and a broadband communication module 110.

The controller 100 of the multi-mode portable terminal controls the overall operation of the multi-mode portable terminal. For example, the controller 100 executes processing and control for speech communication and data communication, measures the strength of received signals received through an antenna 111 of the broadband communication module 110 in addition to conventional functions, and controls the RSSI 102 to determine if the multi-mode portable terminal is in the service coverage area of a broadband network, e.g., Wibro.

When it turns out in the RSSI 102 that the multi-mode portable terminal is in the service coverage area of the broadband network, e.g., Wibro, the controller 100 operates the broadband communication module 110 to demodulate the received signals and thereby determines if the received signals are substantial signals of the broadband network, e.g., Wibro.

When the received signals are not those of the broadband network, the controller 100 terminates the operation of the broadband communication module 110 and controls the RSSI 102 to measure the received signal strength and determine if signals of the broadband network are detected.

The RSSI 102 measures the strength of received signals received through the antenna 111 for receiving the broadband network signals under the control of the controller 100 and decides if the multi-mode portable terminal is in the service coverage area of the broadband network.

The memory 104 can include a Read-Only Memory (ROM), a Random Access Memory (RAM), and a flash ROM. The ROM stores microcodes of a program for controlling the controller 100 and the RSSI 102, and various reference data.

The RAM is a working memory of the controller 100 and stores temporary data generated during the execution of diverse programs. The flash ROM stores various updatable depository data, such as a phone book, outgoing messages, and incoming messages.

The broadband communication module 110 is a physical (PHY) interface module for accessing to the Wibro network. The mobile communication module 112 is a physical interface module for accessing the mobile communication network. According to the present invention, the mobile communication module 112 demodulates the received signals to determine if the received signals are WiBro signals under the control of the controller 100.

The multi-mode portable terminal provides the WiBro service through the broadband communication module 110, when it is in the coverage area of the WiBro service. Outside of the WiBro service coverage area, the multi-mode portable terminal provides the mobile communication service by accessing to a core network through the mobile communication module 112.

The input unit 106 includes number keys of 0 to 9 and a plurality of function keys, such as a menu button, a cancel (or delete) button, an enter button, a talk button, an end button, an Internet access button, navigation buttons (or direction buttons), and a text input button. When a user presses a key, key input data corresponding to the pressed key are input to the controller 100.

The display 108 displays state information (or indicators) generated during the operation of the multi-mode portable terminal, text input by the user, a moving picture, and a still picture. The display 108 may be a liquid crystal display (LCD). When the LCD is realized as a touch screen, the LCD display may be also used as an input unit.

The controller 100 may perform the function of the RSSI 102. However, it is presented as a separate unit in the present embodiment to distinctively show and describe each of the functions. When a product is actually realized, all the functions may executed in the controller 100.

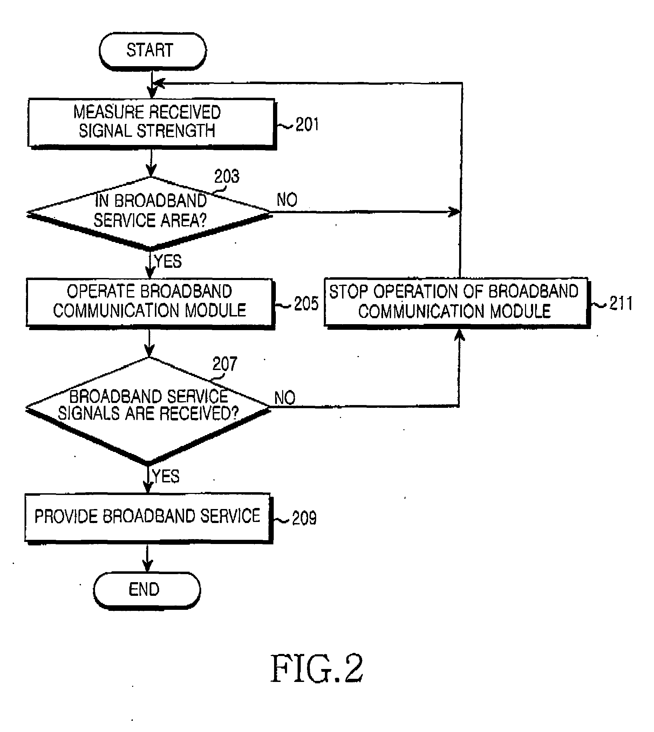

FIG. 2 is a flowchart describing a process of reducing power consumption in a portable terminal searching for a broadband communication network according to the present invention.

Referring to FIG 2, the controller 100 of the multi-mode portable terminal measures the strength of the Wibro signals in step 201, and directs the RSSI 102 to determine if the multi-mode portable terminal is in the service coverage area of the broadband network, e.g., WiBro, in step 203.

The RSSI 102 can determine if there are WiBro signals by measuring the strength of received signals received through the antenna 111 of the broadband communication module 110. The decision of the RSSI 102 is a primary process for determining if there are WiBro signals to be used in the multi-mode portable terminal for the WiBro service.

When the RSSI 102 receives signals whose strength exceeds a predetermined level, the RSSI 102 determines that the multi-mode portable terminal is in the coverage area of the WiBro service. When the RSSI 102 receives signals whose strength is less than a predetermined level, the RSSI 102 determines that the multi-mode portable terminal is outside of the coverage area of the WiBro service.

When the RSSI 102 determines that the multi-mode portable terminal is out of the coverage area of the WiBro service, the controller 100 repeats the process of step 201.

When the RSSI 102 determines that the multi-mode portable terminal is in the coverage of the Wibro service, the controller 100 operates the broadband communication module 110 in step 205, demodulates the received signals in step 207 to determine if the received signals are substantial Wibro signals that have no problem to be used by the multi-mode portable terminal for the Wibro service.

The process of step 207 is a step for determining if the primary decision of step 203 is correct. Since the broadband communication module 110 is operated and makes the double-check only when it is determined that the multi-mode portable terminal is in the coverage area of the Wibro service, it is possible to reduce power consumption of the multi-mode portable terminal, compared to a conventional method of searching for Wibro signals.

When, in step 207, it is determined that the received signals are not substantial Wibro signals, the controller 100 terminates the operation of the broadband communication module 110 in step 211. Subsequently, the controller 100 repeats the process of step 201.

When, in step 207, it is determined that the received signals are substantial Wibro signals, the controller 100 provides the WiBro service in step 209 based on the received Wibro signals. Subsequently, the controller 100 terminates the process.

As described above, the present invention can resolve the power consumption program, which is caused in the conventional method of searching for a broadband network, in the multi-mode portable terminal to support access to at least two different networks by determining if the multi-mode portable terminal is in the service coverage area of a broadband network based on the received signal strength and then demodulating the received signals and determining if the received signals are substantial signals of the broadband network.

The method of the present invention reduces the time for searching for the broadband network.

Alternate embodiments of the present invention can also comprise computer readable codes on a computer readable medium. The computer readable medium includes any data storage device that can store data that can be read by a computer system. Examples of a computer readable medium include magnetic storage media (such as ROM, floppy disks, and hard disks, among others), optical recording media (such as CD-ROMs or DVDs), and storage mechanisms such as carrier waves (such as transmission through the Internet). The computer readable medium can also be distributed over network coupled computer systems so that the computer readable code is stored and executed in a distributed fashion. Also, functional programs, codes, and code segments for accomplishing the present invention can be construed by programmers of ordinary skill in the art to which the present invention pertains.

While the invention has been shown and described with reference to certain preferred embodiments thereof, it will be understood by those skilled in the art that various changes in form and details may be made therein without departing from the spirit and scope of the invention as defined by the appended claims.

## Claims

1. A portable terminal for reducing power consumption for searching for an accessible service network, comprising:
a first communication module for communicating with a heterogeneous network;
a second communication module for communicating with a mobile communication network;
a Received Signal Strength Indicator (RSSI) for determining if the portable terminal is in a service coverage area of the heterogeneous network; and
a controller for operating the first communication module to demodulate received signals and determining if the received signals are of the heterogeneous network, when the RSSI determines that the portable terminal is in the service coverage area of the heterogeneous network.

2. The portable terminal of claim 1, wherein the controller provides the heterogeneous network service through the first communication module, when the received signals are of the heterogeneous network.

3. The portable terminal of claim 1, wherein the RSSI determines if the portable terminal is in the service coverage area of the heterogeneous network based on received signal strength.

4. The portable terminal of claim 1, wherein the controller stops the operation of the first communication module, when the controller determines that the received signals are not signals of the heterogeneous network.

5. The portable terminal of claim 4, wherein the heterogeneous network is a broadband network including at least one of a Wireless Broadband Internet (WiBro) network and a High Speed Downlink Packet Access (HSDPA) network.

6. A method for reducing power consumption for searching for an accessible service network in a portable terminal, comprising:
determining if the portable terminal is in a service coverage area of a heterogeneous network based on strength of received signals; and
when the portable terminal is in the service coverage area of the heterogeneous network, demodulating the received signals and determining if the received signals are of the heterogeneous network.

7. The method of claim 6, further comprising:
providing the heterogeneous network service based on the received signals, when the received signals are of the heterogeneous network.

8. The method of claim 6, further comprising:
repeating the step of determining if the portable terminal is in the service coverage area of the heterogeneous network based on strength of received signals, when the received signals are not signals of the heterogeneous network.

9. The method of claim 6, wherein the heterogeneous network is a broadband network including at least one of a Wireless Broadband Internet (WiBro) network and a High Speed Downlink Packet Access (HSDPA) network.

10. A mobile communication system for reducing power consumption for searching for a service network in a portable terminal, comprising:
a mobile communication network for providing a mobile communication service;
a heterogeneous network for providing a service except for the mobile communication service; and
a portable terminal for supporting both the mobile communication network and the heterogeneous network, determining if signals of the heterogeneous network are received based on strength of the received signals, and when the signals of the heterogeneous network are received, demodulating the received signals, and checking whether the received signals are of the heterogeneous network.

11. The mobile communication system of claim 10, wherein the heterogeneous network is a broadband network including at least one of a Wireless Broadband Internet (WiBro) network and a High Speed Downlink Packet Access (HSDPA) network.

12. An apparatus method for reducing power consumption for searching for an accessible service network in a portable terminal, comprising:
means for determining if the portable terminal is in a service coverage area of a heterogeneous network based on strength of received signals; and
means for demodulating the received signals and determining if the received signals are of the heterogeneous network when the portable terminal is in the service coverage area of the heterogeneous network.

13. A computer-readable recording medium having recorded thereon a program reducing power consumption for searching for an accessible service network in a portable terminal, comprising:
a first segment, for determining if the portable terminal is in a service coverage area of a heterogeneous network based on strength of received signals; and
a second segment, for demodulating the received signals and determining if the received signals are of the heterogeneous network when the portable terminal is in the service coverage area of the heterogeneous network.
